# EUROPEAN PATENT APPLICATION

(11) **EP 2 789 594 A1**
(43) Date of publication of application: **15.10.2014**
(21) Application number: 13162888.5
(22) Date of filing: 09.04.2013
(51) Int. Cl.: C04B 28/18, C04B 38/10, C04B 28/06

(54) **Composite material and method of manufacturing thereof**

(71) Applicant: FireEx Oy, 20101 Turku (FI)
(72) Inventor: Le Bell, Jean, 20500 Turku (FI); Miettinen, Herkko, 20540 Turku (FI); Simola, Jarmo, 20100 Turku (FI); Skovbjerg, Petteri, 20780 Kaarina (FI)
(74) Representative: Kupiainen, Juhani Kalervo

(57) **Abstract**

An inorganic cellular composite material for fire and heat protection, suitable for utilization as a thermal insulator and/or as a core for fire doors and fire proof elements is disclosed. Inorganic composite material comprises a reinforcing fiber component in the form of basalt fiber filaments, and a binder matrix component, provided as a reaction product of calcium silicate- and calcium aluminate compounds with water. Thermal conductivity coefficient (lambda value) of said composite material is shown to decrease upon exposure thereof to elevated temperatures. This phenomenon may be related to fiber-reinforced highly porous structure of the composite material and ability of the binder component to release chemically bound water upon heating.

## Description

### FIELD OF THE INVENTION

The present invention relates to inorganic fiber-reinforced composite materials for heat-and fire protection and to manufacturing methods thereof; in particular the invention concerns said materials with a lightweight cellular structure.

### BACKGROUND

Manifold of fiber-reinforced composite (FRC) materials exist for various applications ranging from industrial to art and design. It is generally accepted that fiber-reinforced composite materials consist of the binder matrix component and of the reinforcing fiber component dispersed within the matrix. Various solidifying, expanding and mold-growth preventing additives may be introduced into a basic composition. It is therefore obvious that various combinations of above mentioned components along with implementations of various manufacturing and/or processing techniques indeed offer to a manufacturer unlimited possibilities in terms of providing materials with anticipated properties.

A common method to reduce density and weight of composite materials is to introduce air voids thereto prior to solidification step. This is done by a technique generally referred as "foaming" and accomplished by mechanical agitation, by addition of surface-active and/or expansive components, or both. Although lightweight FRC materials-based thermal insulators are common and widespread, production of lightweight composites with good fire-retardant properties remains problematic. For example EP 0,674,089 (Ergene) discloses a fire door, manufactured as a sandwich structure provided with two ceramic panels with mineral fiber-reinforced non-cellular composite layer in between. On the other hand, those fiber-reinforced composites with foamed structure, which are known to provide high-temperature insulation (e.g. US 4,100,115 (Baer), US 2005/266222 (Brown et al)), comprise polymer resins, which require an additional cure during manufacturing process in order to achieve optimal thermal performance.

One of the notable shortcomings of composite materials utilized as filling for fire-retardant construction elements (e.g. doors, hatches, shutters), is the requirement of rather precise adjustment of the manufacturing methods thereof for a certain type of a product, resulting in the fact, that the composite tailored for application by e.g. casting into formworks is unsuitable for application by spraying and vice versa.

With a new EU Construction Product Regulation (305/2011) entering into force on 1 July 2013 and setting new harmonized standards for construction products, it is actual and timely to develop said products in compliance with a new, more strict set of standards, which include, among others, the standards for fire resistant doors (EN 1634-1).

In order to solve an above mentioned compliance problem, it may be desirable to develop new materials instead of tailoring old ones for new standards. Therefore, it is still desirable to provide lightweight fiber-reinforced composite material with improved heat resistance characteristics and in particular suitable for fire protection applications, and a process of manufacturing thereof.

### SUMMARY OF THE INVENTION

The objective of the present invention is to at least alleviate one or more of the aforesaid problems by providing a functional composite material for thermal insulation and heat-and fire- protection purposes and a manufacturing method thereof.

The objective is achieved by implementing a novel inorganic, fiber-reinforced composite material with essentially cellular, porous structure, which composite material comprises air cavities supported by a network of inorganic fibers bound together by an inorganic hydraulic binder component.

For clarity purposes the composite material of present disclosure will further be referred to as a "composite material", unless otherwise mentioned. It is to be understood, that this expression refers to such a material, which had undergone all essential production stages, as disclosed further, including air entrainment.

In the preferred embodiment the composite material is provided, comprising: 1) a reinforcing fiber component, comprising inorganic fibers, preferably basalt fibers and 2) a binder matrix component, comprising a hydraulic binder compound and water. The hydraulic binder compound is represented by blend of silicate-based and aluminate-based binders, resembling calcium silicate-based Portland-type cements and calcium aluminate cements. Water molecules are provided in chemically bound form within crystal lattices of hydrated binder compounds. The fibrous network is supported by cavities or voids formed in place of air bubbles in the course of a manufacturing process such, that the composite material imparts an essentially cellular structure. The reinforcing fiber component is preferably obtained by free-spinning or centrifugal blowing methods.

In some embodiments aluminate- and silicate-based cements may be utilized separately.

In some alternative embodiments other mineral fibers (commonly referred to as MMMF, Man Made Mineral Fibers), such as rock fibers, or glass fibers may be utilized as an inorganic reinforcing fiber component.

In some embodiment long fibers are utilized.

In other supplementary embodiments the composite material may be provided with additives, such as sodium carbonate, magnesium oxide, gypsum and/or Glauber's salt.

It is another aspect of the invention to provide a method of manufacturing the composite material in accordance to the embodiments set above.

Still another aspect of the invention is to provide the composite material in accordance with some embodiments for utilization thereof as a thermal insulation in the form of various elements, layers and/or coatings for buildings and other construction products.

Further aspect of the invention is to provide the composite material in accordance with some embodiments for utilization thereof as a filling material for fire-proof sandwich-and/or framed structures, including, but not limited to various doors, hatches, shutters, lids and the like.

The utility of the present invention arises from a variety of reasons depending on each particular embodiment thereof. The composite material provided in accordance to the embodiments of present invention contains both binder- and reinforcing fiber components realized on an inorganic basis. Conventional composite materials intended for fire- and thus released heat protection purposes are based on organic binders. Said organic binders are, in practice, represented by combustible hydrocarbons (often aromatic hydrocarbons), which release toxic fumes in fire situations. Inhaling such fumes results in destructive health effects for anyone in reach while prolonged inhaling leads to lethal poisoning; effective operation of emergency services may be hindered as well. Provision of the composite material disclosed herewith is such that heating thereof to high temperatures does not result in release of poisonous substances. By utilization of such material in construction buildings a total of lethal cases caused by fume poisoning during fire- and/or conflagration situations may be prevented or at least a count thereof may be significantly reduced.

Provision of the composite material disclosed herewith enables unique heat conductivity characteristics, wherein thermal conductivity coefficient (lambda-value) of said material decreases when the composite is exposed to high temperatures. The term "high temperatures" within this disclosure is utilized to indicate heating to temperatures at least 100 °C and above, in other words, to point out temperature conditions occurring during fire. Insulation properties of the composite material disclosed herewith are shown to be superior to that of conventional mineral wool insulation materials so, that the composite material thus disclosed provides at least twice better insulation.

The composite material of present disclosure does not shrink in a frame or in a formwork during temperature increase, whereas conventional fiber-based insulation materials suffer from this common drawback.

Versatility of the composite material disclosed herewith allows said material to be produced with adjustable physical properties and therefore suitable for a variety of different applications. In other words, the composite material of this disclosure allows application-dependent handling thereof by different methods, e.g. by pumping, extrusion, molding, casting or spraying. This fact makes the composite material in accordance to various embodiments of present invention suitable for utilization as separately applied insulation (e.g. by spraying or layering), as core filling material for fire-proof constructions (doors, hatches, panels and the like) and/or as a filling material for any hollow structural element. The composition of said material and layer thickness thereof may additionally be varied in accordance with the desired fire rating to be achieved. Furthermore, versatility of said composite material and its application-dependent handling potential enable certain flexibility in installation of constructional elements comprising said material due to possibilities of partial on-site production and/or finishing the product.

The expression "a number of" refers herein to any positive integer starting from one (1), e.g. to one, two, or three.

The expression "a plurality of" refers herein to any positive integer starting from two (2), e.g. to two, three, or four.

The term "element" may herein refer also to a multi-part element with multiple functionally and optionally also physically connected elements in addition to single-part or integrated elements.

The term "crystal water" or "crystalline water" refers in this disclosure to water molecules incorporated into crystalline structure (crystal lattices) of hydrated binder compounds.

The term "foamed" refers in this disclosure to a material containing a plurality of distinct empty void spaces formed in the bulk mass; the term "foaming" refers to a process of formation of such void spaces in a bulk mass; and the term "foam formation agent" refers to any chemical or gas which triggers and promotes the foaming process.

The term "composite blend" refers in this disclosure to a mixture of binder component and reinforcing fiber component, either dry or admixed with water. In the latter case the term "composite blend" refers to a bulk mass to which air has not yet been entrained. Terms "composite material", "cellular composite material" and "cellular composite blend" refer, in opposite, to a material which has undergone an air entrainment stage.

Different embodiments of the present invention will become apparent by consideration of the detailed description and accompanying drawings.

### BRIEF DESCRIPTION OF THE DRAWINGS

Figs. 1A-C illustrate mechanism of cellular structure formation.
Fig. 2 schematically illustrates an exemplary process for manufacturing of the composite material in accordance to the embodiments.
Fig. 3 schematically illustrates the process of chemically bound water release occurring in the composite material upon exposing it to high temperatures.

### DETAILED DESCRIPTION OF THE EMBODIMENTS

Detailed embodiments of the present invention are disclosed herein with reference to accompanying drawings. The same reference characters are used throughout the drawings to refer to same members.

An inorganic, fiber-reinforced composite material for thermal insulation and heat- and fire protection purposes is thus provided. In the preferred embodiment said material comprises a mixture of fiber-, binder- and water components, into which mixture air is entrained to form upon hardening a foamed structure.

Starting composition for the composite material requires a presence of a reinforcing fiber component and a binder matrix component. A reinforcing fiber component consists of inorganic fibers, preferably basalt fibers. Basalt fiber is produced from crushed basalt, which is composed of the minerals plagioclase, pyroxene, and olivine. Manufacturing of the basalt fiber requires melting of quarried basalt rock at about 1450 °C. Molten rock can then be extruded through small nozzles to produce continuous filaments of basalt fibers. Preferably, basalt fibers are manufactured by centrifugal-blowing or free-spinning techniques. Fibers manufactured by free-spinning techniques have elongated teardrop-shape and form a heterogeneous blend in which length and thickness of individual fibers vary. These features differentiate free-spinning fiber filaments from e.g. extrusion fiber filaments. Length of thus obtained fiber filaments is adjusted on a millimeter scale to be 2-35 mm, preferably 5-30 mm and still preferably 8-25 mm; and external diameter (thickness) thereof is adjusted on a micrometer scale to be 2-18 µm, preferably 3-14 µm, still preferably 4-10 µm Even with a typical external diameter of filament adjusted between 9 and 13 µm, it is far enough to go above the respiratory limit of 5 µm to make basalt fiber a suitable replacement for asbestos. Still, in some embodiment so called long fibers with length of 20-30 mm and external diameter 10-20 µm may be utilized. Those may be produced utilizing chopped strands from continuous filaments.

Basalt fibrous materials are in general characterized by high-temperature resistance, high corrosion resistance, resistance to acids and alkalis, high strength and thermal stability. Furthermore, said materials exhibit good anti-oxidation, anti-radiation, thermal and sound insulation properties, anti-compression strength and high shear strength. In addition, those materials are easily accessible and demonstrate good cost performance. As an alternative, other mineral fibers and man-made mineral fibers (MMMF), such as rock fibers and glass fibers, for example, may be utilized.

A dry binder matrix component comprises at least one hydraulic binder compound. A binder matrix component provided within the composite material comprises added water and represents a reaction product of the dry binder component with water, i.e. a hydration product. In the preferred embodiment, the hydraulic binder compound is represented by silicate-based and aluminate-based binders. Water may be admixed into each binder compound separately or, alternatively, a so called dry mix may be prepared. The dry mix may thus comprise both silicate- and aluminate compounds, and water may be admixed therein later on.

The silicate-compound constitutes 65-95 percent by volume of the binder matrix and is preferably represented by tricalcium silicate- (3CaO·SiO₂) and dicalcium silicate (2CaO·SiO₂) -based mixture. To be more precise, these silicates comprise at least two thirds of chemical composition of the above mentioned mixture. Reactions of silicate-based mixture with water are complex and so far only partly understood; it is generally known, that upon hardening the binder constituents crystallize incorporating water molecules into crystal lattices thereof.

Another compound, which constitutes about 5-25 percent by volume of the binder matrix, is aluminate-based and is represented by at least one type of calcium aluminate binder. A blend consisting of at least two different calcium aluminate binders is preferably utilized. Hydration reactions of calcium aluminate binders are no less complex than in above mentioned silicate case, however the water binding mechanism is substantially the same. Hydrated binder may thus comprise at least one of the following aluminate hydrate compounds: calcium aluminate decahydrate (CaOAl₂O₃·10H₂O or, according to common cement nomenclature, CAH₁₀; chemically bound water content 52 %; dehydrating temperature 100-130 °C); dicalcium aluminate octahydrate (2CaO·Al₂O₃·8H₂O or C₂AH₈; chemically bound water content 40 %; dehydrating temperature 170-195 °C); tricalcium aluminate hexahydrate or katoite (3CaO·Al₂O₃·6H₂O or C₃AH₆; chemically bound water content 28%; dehydrating temperature 300-360 °C); hexacalcium aluminate trisulfate hydrate or ettringite (3CaO·Al₂O₃·3CaSO₄·32H₂O or C₃AS₃H₃₂; chemically bound water content 59%; dehydrating temperature 100-140 °C).

Particular choice of the above mentioned materials to constitute the binder matrix component may be substantiated by the following reasons. Firstly, inorganic aluminates and silicates are incombustible and therefore suitable for the purposes of heat and fire protection. Secondly, both aluminates and silicates possess strong binding to inorganic fibers, thus providing an optimal combination with either mineral- (basalt, stone) or glass fibers. Furthermore, said compounds are alkaline and due to high pH value they are able to inhibit, or to at least withstand, corrosion. Mentioned aluminate and silicate compounds are capable of releasing both physically and chemically bound water. Moreover, said compounds are compatible with gypsum and other similar materials, which may affect increased rates of chemically bound water within the binder.

An essential feature of the composite material provided herewith is its cellular or porous structure. Required cellularity is attained by entraining air into the composite blend by one of the methods disclosed further on. Incorporating of various light weight fillers, like perlite, vermiculite and/or ceramic spheres is therefore not required; utilization of aforementioned fillers is not, however, excluded.

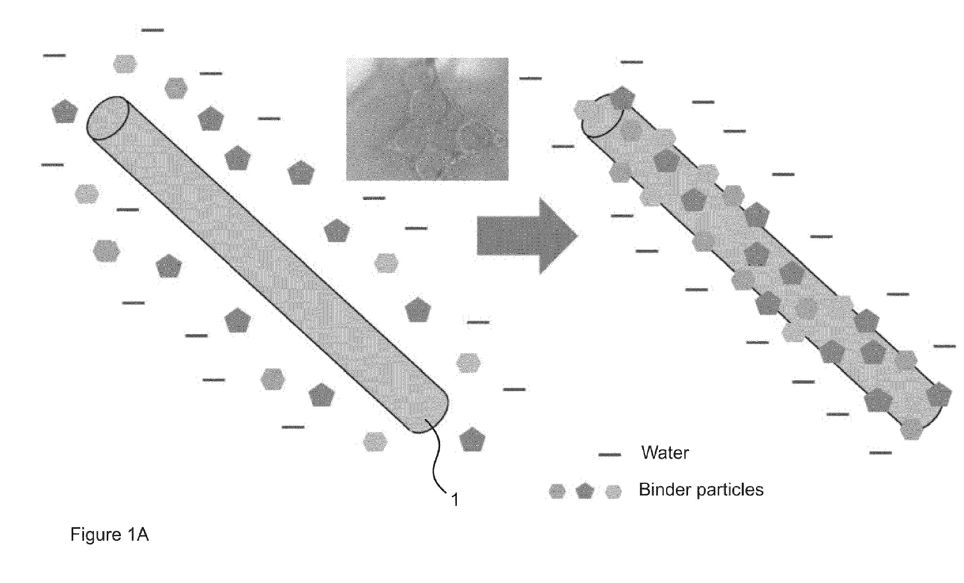

Figs. 1A-C demonstrate the three-stage mechanism assumed to take place upon the cellular composite structure formation process. During the first stage a hydrated composite blend is obtained by admixing water to the dry composite blend or by admixing water to dry binder matrix component(s) followed by addition of the fiber component. Regardless of the undertaken approach, the purpose of this step is to obtain hydrated binder compounds and to combine them with fiber filaments. Fig. 1A illustrates the process of the gel-like binder formation as a result of the complex reactions of aluminate- and silicate compounds in the water phase (left) and subsequent binding of aluminate- and silicate compounds to fiber filaments 1 (right). Formation of so called bi-component fibers thus occurs, because fiber filaments 1 become covered by a gel-like sheet consisting of the hydrated aluminate/silicate binder. Since the hydrated state for binder compounds is also its reactive state, said binder compounds are thus able to bind fiber filaments together. More specifically, a gel-like sheet is formed of ionic constituents of the dissolved anhydrous binder compounds, and the process involves mechanisms of hydrate formation in solution and their eventual (re)-precipitation due to low solubility thereof. Also solid-state topochemical hydration may occur. The above mentioned reactions do not take place in the solution, but rather directly at the surface(s) of the fiber filaments which surface(s) are covered with binder compounds particles.

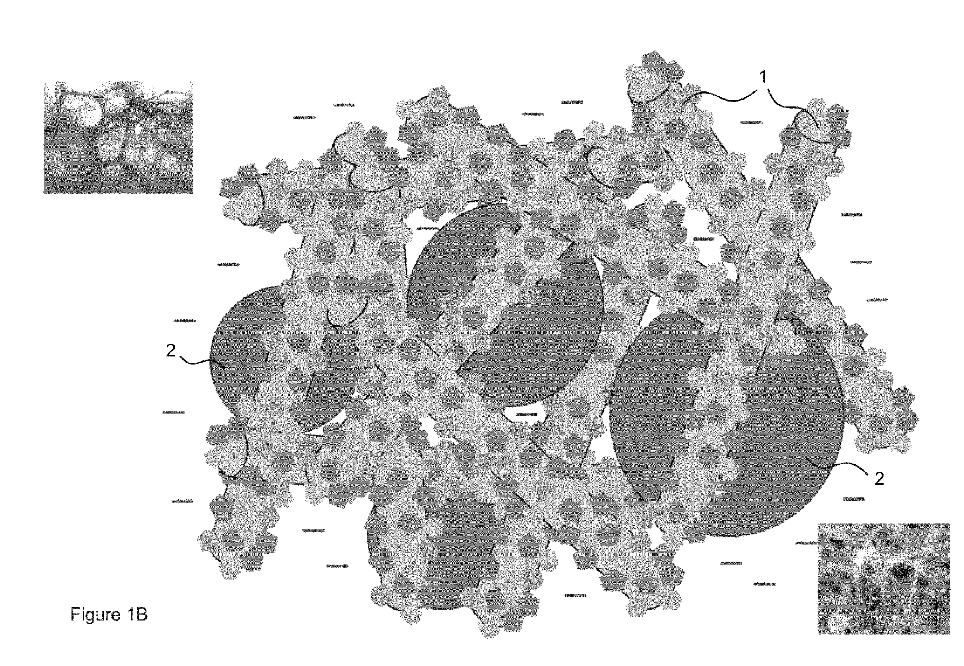

Fig.1B illustrates process of air entraining into the composite blend solution. Air may be introduced into the composite blend solution by blowing, or, alternatively, air may be generated within the blend solution by vigorous mixing of the latter. In the preferred embodiment a dissolver-type device is utilized for the purposes of air entrainment. Pressurized air is thus blown into a dissolver tank with the composite blend solution contained therein, while the contents of the dissolver tank is continuously stirred by means of a high-speed dispersion disk shaped like a circular saw blade. Stirring speed is adjusted such, that incoming air absorbs and distributes evenly throughout the contents of the reactor. At this stage formation of air bubbles 2 occurs. The filamentous network is supported by air bubbles until the binder matrix would have gained its initial strength. The air entrained solution density may be altered in the range of 100-1260 kg/m³. Other gases than air may also be utilized.

In order to obtain lower density products, supplementary foam formation agents may optionally be utilized, such as proteins, surfactants, stabilizers (e.g. microfibers, bentonite) or various network formers (e.g. microfibers, clays). Some of these foam formation promoting agents represent the only organic component provided within the composite material, wherein the maximum total amount of said organic component does not exceed about 0,40 wt. %.

The amount of water is adjusted to such a level, that all water molecules will be chemically bound (i.e. will react) to form calcium aluminate- and/or calcium silicate hydrates along with calcium aluminosilicate hydrates. Precise adjustment of admixed water amount is important to ensure chemical binding of all water molecules and further crystallization thereof. Whether surplus of water is utilized, it will remain in the structure as physically absorbed.

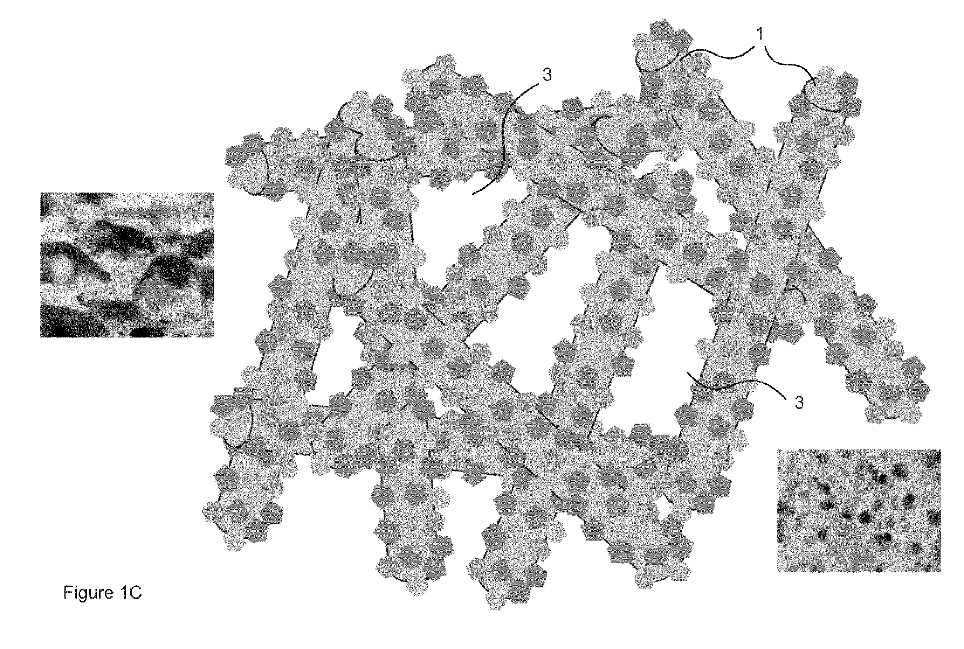

Fig. 1C illustrates a final stage of the cellular structure formation process, when air cavities 3 remain at the place of air bubbles. In order to understand the cavity formation process a comparison with conventional soap bubbles may be drawn. Within this association, transformation from bubble of Fig. 1B to cavity of Fig. 1C occurs so, that the bubble bursts and its walls disappear. Since the fiber-binder network has already gained sufficient strength, it does not collapse at the moment of bubble's burst, and a plurality of small pockets of air (voids or pores) is formed at the places of incorporation of air bubbles. The total volume of air voids throughout a composite material is expressed herein in percent units from the bulk volume of said material. Air voids may thus comprise 55-96 percent of the bulk volume of the composite material, preferably 79-92 percent of the bulk volume thereof.

The fiber-reinforced network is strengthened while the binder component gains more strength during still occurring reactions between binder constituting compounds and water. The cellular structure stiffens and hardens as disclosed further on.

The pore size can be adjusted by regulating the volume of air entrained and by varying (decreasing or increasing) the size of forming air bubbles. For adjustment different types of dissolvers and mixers may be utilized.

During the hydration process three phases can clearly be recognized, indicated herein as stiffening, setting and hardening. The stiffening phase is accompanied by the process of bubble-to-cavity transformation and formation of actual air voids. This phase is the shortest on a time-scale and lasts about 0,1-10 min. During the stiffening phase the composition largely gains its cellular structure. Therefore, it is a cellular composite material, which enters the setting phase, which may last about 0,2 - 20 hours. During this phase the composite material may be shaped by any appropriate method or otherwise applied and/or handled. During the hardening phase aluminate- and silicate hydrate compounds crystallize incorporating water molecules into the crystal lattice thereof thus giving rise to so called crystalline water, within the definition provided above in this disclosure. The cellular structure is supported largely by reinforcing fibers. The hardening phase may last from 1 day up to 30 days. It is to be understood, that duration of each phase is largely dependent on binder composition, ratio of aluminate and silicate compounds, water content, temperature and overall technical parameters and it has to be experimentally adjusted for each type of composite material produced.

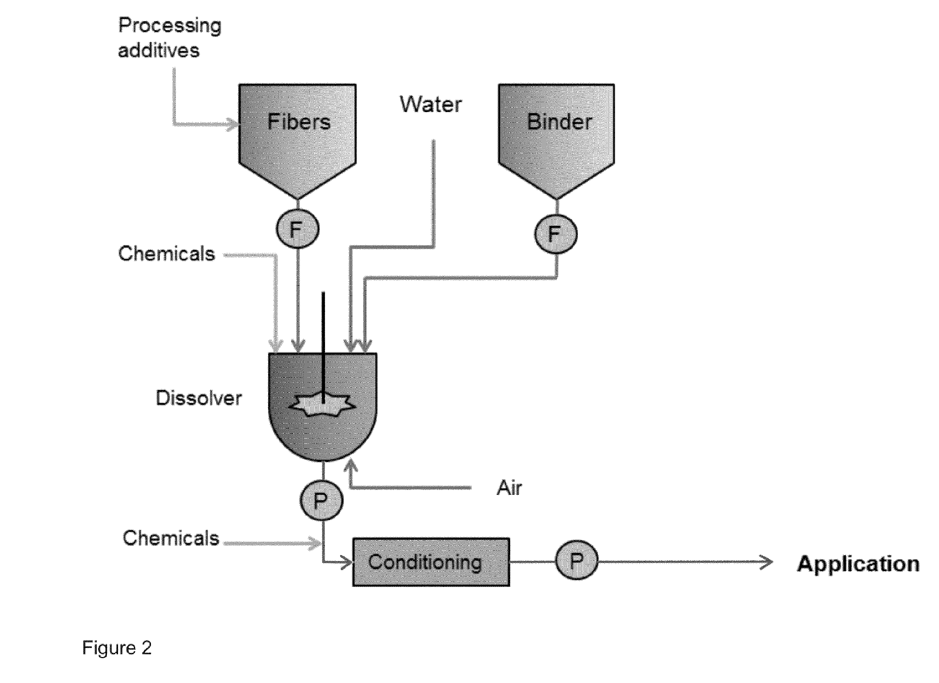

Fig.2 schematically illustrates an exemplary process of manufacturing the composite material in accordance with the preferred embodiment. Indication marks F and P refer herein to feedstock and product, accordingly. Water, herein, may be admixed either to dry binder constituents, to which hydrated mixture a fiber component may further be added; or alternatively water may be admixed into a dry composite blend. Various additives may be added to the blend, such as sodium carbonate, calcium oxide, magnesium oxide, gypsum and/or Glauber's salt, for example. Sodium carbonate (Na₂CO₃, washing soda) functions herein as an additional source of crystalline water, thus influencing the humidity balance. Moreover, sodium carbonate acts as a stiffening accelerator thus causing reduction in stiffening time, wherein shorter stiffening times are favorable for stabilizing pore structure in fresh composite. Addition of sodium carbonate ensures improved bonding between the composite material and the solid surface said composite material is applied to during final handling/application stage (Fig. 2). Other chemicals, such as gypsum or Glauber's salt (sodium sulfate decahydrate, Na₂SO₄·10H₂O), may be added into the composite blend, in order to increase an amount of releasable crystalline water. Those chemicals may be added directly into the dissolver tank and be present during air void formation process or, alternatively, may be admixed into a cellular composite product during the conditioning stage, at which stage the viscosity of the product may be adjusted by adding an inorganic dispersant thereto, such as hexametaphosphate or waterglass (sodium or potassium silicate), for example.

A freshly formed composite blend is shown to exhibit non-Newtonian behavior, such as thixotropy, by demonstrating time-dependent changes in viscosity; the longer such blend undergoes shear stress, the lower its viscosity. By the term of "viscosity" we refer herein to a measure of a fluid's ability to resist gradual deformation by shear or tensile stresses. Freshly formed (not yet hardened) composite blend thus demonstrates thixotropic nature, being able to become less viscous over time when shaken, agitated, or otherwise stressed (so called fluid state) and to return to a more viscous state in an absence of further impact (so called gel state). This feature is of crucial importance for the applications where the composite material must be applied by pumping, extrusion and the like. As a consequence, such material is easy to apply when it is in fluid state, upon filling a mold by injection, for example. At the same time the gel-state thixotropic composite, utilized as filling material, demonstrate reduced shrinkage and increased stability in comparison with conventional filling materials.

Freshly formed composite material is therefore readily applicable by various methods, such as extrusion, casting, molding, pumping or spraying. The composite material is thus equally suitable for utilization as a core filling material for various sandwich structures, as filling material for frame structures and for any other hollow structures or construction elements, as well as for direct application onto surfaces of various objects, such as providing insulation for pipes and steel beams, for example.

The composite material as disclosed herewith is shown to demonstrate unique behavior provided as unexpected changes in heat transfer properties upon being exposed to high temperatures. Thermal conductivity coefficient (lambda, λ) and, correspondingly, heat transfer coefficient of said composite material are shown to decrease upon exposing thereof to high temperatures, when compared to the material which has not been exposed to high temperatures. Such behavior has been demonstrated during several full scale fire tests, conducted with frames and hatches assembled utilizing the composite material of disclosed embodiments. The composite material has been utilized as filling material for window frames of steel, wherein test window structure has been built such, that the composite material was applied over a perimeter of the frame (frame thermal insulation). Test window comprised a fire-proof glass. Test hatch has been built in a form of a so called sandwich-structure, wherein the composite material has been placed in between two steel sheets. Composite-filled structures were installed into a test furnace chamber suitable for full-scale fire resistance measurements. Measurements were conducted by heating said furnace chamber. Temperature- and heat transfer parameters were measured by means of a plurality of sensors attached to the external surface of testable fire barrier structure (herein, window and hatch). During the course of the experiments it has been found, that the outside temperature (measured on an external "cool" surface) of fire barrier structure under test rises to about 100 °C in about 10 minutes and stabilizes. Outside temperature of fire barrier structure did not rise over 100 °C for about an hour, whereas temperature inside the furnace reached about 1000 °C. Further increase in temperature thus occurred after 60-70 minutes after the start of the experiment (after start of the heating). The test was conducted in accordance to EN 1634-1 standard.

In addition to that, a decrease in thermal conductivity has been detected in about 20 minutes after launch of the test. In order to perform quantitative measurements for thermal conductivity parameters (lambda value) a set of experiments was conducted by using modified ASTM C177 test method (Standard Test Method for Steady-State Heat Flux Measurements and Thermal Transmission Properties by Means of the Guarded-Hot-Plate Apparatus). The results for these measurements are presented in Table 1.

Thermal conductivity (lambda, λ, W/m °C) of a material is generally expressed as the quantity of heat that passes in unit time through a plate of particular area and thickness when its opposite faces differ in temperature by one degree, and may be utilized for calculation of a heat transfer coefficient for structures of varying thicknesses. For present lambda value measurements samples were thermally treated at different temperatures within the range of 20-1000 °C. Lambda values of thermally treated samples were measured at 20 °C. The thicknesses of the samples were 15 mm.

**Table 1. Results of thermal conductivity measurements conducted on samples of the composite material at different temperatures.**

| Heated to Temperature, °C | Lambda (λ, W/m °C) Measured at 20 °C |
|---|---|
| Not heated | 0,057 |
| 200 | 0,048 |
| 400 | 0,043 |
| 600 | 0,043 |
| 800 | 0,043 |
| 1000 | 0,043 |

The results indicate, that the lambda value of the measured composite material decreases in the temperature range between 200 and 400 °C. The lower the lambda value, the better insulation properties the material possesses.

During experimental fire trials utilizing the composite material in accordance with the embodiments it has been shown that the insulation properties of said material are superior to those of common mineral wool insulation products.

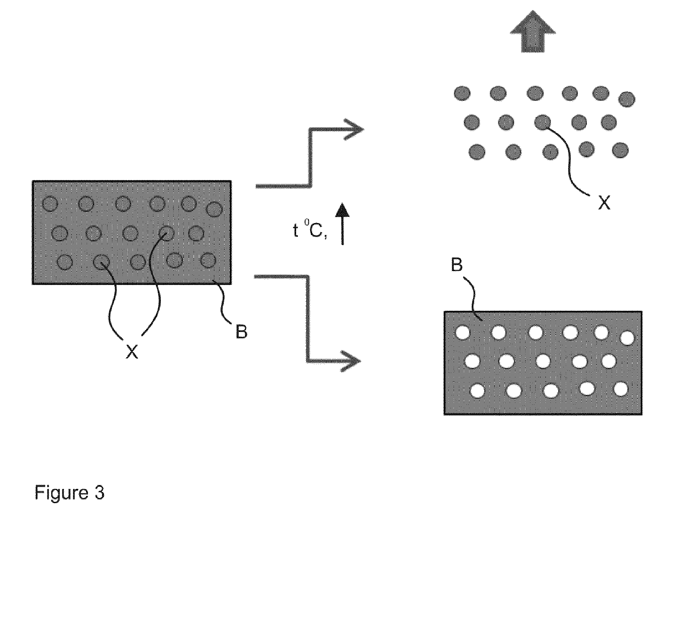

The phenomenon thus observed may be explained in terms of aluminate- and/or silicate-based binder matrix chemistry. Provision will now be made to Fig. 3 illustrating behavior of the composite material upon temperature elevation. As it was discussed in details above, the composite material of the embodiments comprises reinforced fibers covered with gel-like sheet consisting of the hydrated aluminate/silicate binder in water, which water molecules crystallize and incorporate into the crystalline lattices of the binder compounds upon setting and hardening of the composite material. Fig. 3 therefore schematically illustrates aluminate-silicate hydrate binder (B) with chemically bound molecules of crystalline water (X) therein. When the fire barrier structure provided with composite filler as disclosed above is exposed to elevated temperatures, chemically and physically bound within the hydrated lattice water molecules (left) are released (right). Assuming that a point fire had occurred at a one side of an exemplary fire (heat) barrier structure, such as a fire door, hatch or the like, said barrier structure becomes exposed to fire (heat) from one side. The ambient temperature thus starts rising at the heat exposed side of the barrier structure gradually heating it throughout. While heat flows in a direction of still "cool", i.e. fire unexposed, side of the barrier structure, chemically bound water is gradually released from the composite material (Fig. 3, right) said barrier structure is filled therewith so, that water molecules "evaporate" from crystal lattices of binder compounds resulting in an increased amount of air voids (indicated as empty (white) circles on a binder structure B, Fig. 3, right). This process is accompanied by a decrease in thermal conductivity coefficient (lambda value), and thus by a decrease in heat transfer coefficient. The decrease in lambda value is thus detected as soon as water is released from the innermost (fire exposed) layers of the composite material. Lambda value continues to decrease because of continuous heat intake by a fire-exposed barrier surface until the moment all chemically bound water had evaporated. Until that moment the temperature of an unexposed surface of the fire barrier would not heat up over 100 °C, as mentioned above.

Furthermore, release of chemically bound water from otherwise hydrated compounds of the binder is accompanied with structural changes thereof (Fig. 3). Absence of crystal water in the lattice causes micro- and/or nanopore formation in the composite material provided as filling material within the barrier structure from the direction of fire-exposed side. Total amount of air voids also increases. Structural changes are accompanied with the decrease of lambda value, which, in turn, results in lower heat transfer. Combining results of Table 1 with current observations on chemically bound water release it may be assumed, that crystalline water evaporates from the composite material somewhere at 200-400 °C. Structural changes therefore appear in the composite material which has temperatures above 100 °C up to 400 °C, herein, in the innermost, fire- and/or heat exposed region of the composite material. The temperature on an unexposed, cool side remains, however, at a constant value under 100 °C because of evaporating water. Aforesaid region, where the structural changes occur, moves slowly from the heat exposed side in the direction to the unexposed side. Temperature of the heat unexposed side thus remains under 100 °C until the region heated to 200-400 °C reaches said unexposed, cool side.

It should be understood, however, that present parameters only represent results obtained during several experimental sets and the purpose thereof is to illustrate physical and chemical processes ongoing in the composite material upon heating; these parameters may vary dependent, primarily, on the thickness of fire-proof elements.

Release of crystal water molecules may also be regulated by adjusting chemical composition of the composite filler material. As already mentioned above, different aluminate hydrate compounds comprised within the binder component of the composite material have varying water content and different dehydrating temperatures. For example, while calcium aluminate decahydrate has 52 % of chemically bound water and dehydrates at about 100-130 °C, tricalcium aluminate hexahydrate or katoite has 28 % of chemically bound water, but dehydrates at 300-360 °C. Adjusting the amount of these compounds within the composite blend enables production of customized fire protection materials to meet various requirements of specific applications.

During heat impact from a heat exposed direction composite material does not shrink, since the reinforcing fibers are all the time being supported by a non-shrinking binder. Bulk of the composite material thus becomes more porous, but does not acquire changes in volume and remains adhered to the steel support throughout experimental fire tests.

The composite material as disclosed herewith thus demonstrates: 1) increase in thermal resistance properties compared to conventional insulation after it has been exposed to temperatures above 400 °C. This is possibly provided as a result of structural changes within crystal lattices of the binder matrix component; and 2) stable non-shrinking behavior, expressed in terms of keeping constant, temperature-independent volume and demonstrating temperature-independent retention within the formwork (remaining cohesive to the walls of said formwork, e.g. steel support).

It is clear to a person skilled in the art that with the advancement of technology the basic ideas of the present invention may be implemented in various ways without diverging from the fulcrum of the present invention. The invention and its embodiments are thus not limited to the examples described above; instead they may generally vary within the scope of the appended claims.

## Claims

1. A cellular composite material for heat and fire protection, comprising a reinforcing fiber component in the form of fiber filaments, and a binder matrix component, **characterized in that**
- the binder matrix component is a reaction product of calcium silicate- and calcium aluminate compounds with water and the composite material includes water to such an amount, that essentially all water molecules are chemically bound in calcium silicate and calcium aluminate compounds forming hydrated calcium silicate and calcium aluminate compounds;
- the composite material comprises air voids in a range of 55-96 percent by bulk volume, preferably 79-92 percent by bulk volume;
- the ratio of fiber filaments and the binder matrix component within the composite material is adjusted such that said composite material acquires structural changes upon being exposed to high temperatures, such as upon fire, by gradual release of chemically and physically bound water from crystal lattices of the binder matrix component, which structural changes are functionally coupled to a gradual lowering of lambda value of said composite material occurring in the conditions of continuous heating until the moment all chemically bound water is released.

2. The composite material of claim 1, wherein the fiber component consists of inorganic fiber filaments which length is adjusted within the millimeter range of 2-35, preferably 5-30 and more preferably 8-25; and which external diameter is adjusted within the micrometer range of 2-18, preferably 3-14 and more preferably 4-10.

3. The composite material of claim 2, wherein the fiber component consists of a plurality of mineral fiber filaments.

4. The composite material of claim 3, wherein the fiber component consists of a plurality of basalt fiber filaments

5. The composite material of claim 2, wherein the fiber component consists of a plurality of glass fiber filaments.

6. The composite material of claim 1, wherein an amount of the calcium silicate compound is adjusted within the range of 65-95 wt. % with regards to total weight of dry binder component.

7. The composite material of claim 1, wherein an amount of the calcium aluminate compound is adjusted within the range of 5-35 wt. % with regards to total weight of dry binder component.

8. The composite material of claim 1, comprising at least one additive compound from the selection of sodium carbonate, calcium oxide, magnesium oxide, gypsum and Glauber's salt.

9. The composite material of claim 1, which retains an initial bulk volume within the formwork and firm adherence to formwork upon subjecting said formwork to high temperatures, as upon fire.

10. Method for manufacturing of cellular composite material as defined in claim 1 **characterized in that** it comprises the following stages:
- obtaining a dry blend of silicate- and aluminate compounds;
- admixing water into the above said blend by means of a mixer-dissolver apparatus and thus obtaining a reactive binder matrix component;
- obtaining a reinforcing fiber component;
- admixing a reinforcing fiber component into a binder matrix component by means of a mixer-dissolver apparatus and thus obtaining a composite blend;
- admixing additive compounds into a composite blend;
- entraining air into a composite blend by blowing pressurized air into a mixer-dissolver tank containing the composite blend and by dispersing thus entrained air throughout the bulk mass by simultaneous high-speed stirring of the tank contents;
- conditioning of the cellular composite material;
- shaping and/or application of thus obtained cellular composite material for final use;
- drying the cellular composite material or allowing it to dry; and
- curing the cellular composite material or allowing it to cure.

11. Method of claim 10, wherein rate and size of air voids in the cellular composite material may be adjusted at air entrainment stage.

12. Method of claim 10, wherein the density of the cellular composite material at air entrainment stage may be altered in the range of 100-1260 kg/m³.

13. Method of claim 10, wherein supplementary foam formation agents from the selection of proteins, surfactants, stabilizers, such as microfibers or bentonite, and various network formers, such as microfibers or clays, may optionally be admixed into a composite blend, provided that total amount of the organic component within the composite blend does not exceed 0,40 wt. %.

14. Method of claim 10, wherein shaping stage comprises at least one handling procedure from the selection of pumping, extrusion, molding, casting, calendering, spraying or layering.

15. Method of claim 10, wherein water is admixed into a dry blend comprising both silicate- and aluminate compounds and a fiber component.

16. Method of claim 10, wherein the fiber component is manufactured by free-spinning or centrifugal blowing techniques.

17. Use of a composite material as defined in claim 1 and manufactured by the method of claim 10 as a thermal insulate and/or a fire barrier in the form of sprayable layers and/or coatings for buildings and construction elements.

18. Use of a composite material as defined in claim 1 and manufactured by the method of claim 10 as a filling material for fire-proof sandwich- and/or framed structures, including, but not limited to various doors, hatches, shutters, lids, panels, door and window frames and the like.

19. A fire proof door provided with hard casing and a core filler therewithin, **characterized in that** it comprises the composite material as defined in claim 1 and manufactured by the method of claim 10 as core filler for the hard casing.
